# EUROPÄISCHE PATENTSCHRIFT

(11) **EP 0 977 100 B1**
(45) Veröffentlichungstag und Bekanntmachung des Hinweises auf die Patenterteilung: **10.10.2007**
(21) Anmeldenummer: 99113131.9
(22) Anmeldetag: 07.07.1999
(51) Int. Cl.: G05B 19/05

(54) **Sicherheitsvorrichtung für eine speicherprogrammierbare Steuerung**
Safety device for a programmable logic controller
Dispositif de sécurité pour un automate programmable industriel

(30) Priorität: 30.07.1998 DE 19834331
(43) Veröffentlichungstag der Anmeldung: 02.02.2000
(73) Patentinhaber: ROBERT BOSCH GMBH, 70442 Stuttgart (DE)
(72) Erfinder: Wamsser, Reiner, 64720 Michelstadt (DE); Lerch, Hans-Peter, Dr., 64711 Erbach (DE); Haeufgloeckner, Jürgen, 63897 Miltenberg (DE); Zeller, Joachim, 64720 Michelstadt (DE); Wolff, Gerhard, 64720 Michelstadt (DE)

(56) Entgegenhaltungen:
- DE-A- 19 625 195
- US-A- 4 291 388
- US-A- 5 392 424
- LUETKENS L: "DOS FUR ECHTZEITAUFGABEN MIT GERINGEM AUFWAND FUR C-PROGRAMMIERER REALISIERBAR" ELEKTRONIK,DE,FRANZIS VERLAG GMBH. MUNCHEN, Bd. 42, Nr. 23, Seite 125-129 XP000414815 ISSN: 0013-5658
- WOLLERT J ET AL: "AUTOMATISIEREN MIT DEM PC? WAS DER PERSONAL COMPUTER KANN UND WO ER PASSEN MUSS" ELEKTRONIK,DE,FRANZIS VERLAG GMBH. MUNCHEN, Bd. 43, Nr. 6, Seite 76-82 XP000441006 ISSN: 0013-5658

## Beschreibung

### Stand der Technik

Die Erfindung geht aus von einer Sicherheitsvorrichtung für eine speicher programmierbare Steuerung mit einer Speicher Programmierbaren Steuerung (SPS) nach der Gattung der unabhängigen Ansprüche. Aus der DE 44 06 094 A1 sind ein Verfahren und eine Vorrichtung zum Echtzeitbetrieb eines Prozessors bekannt. Zum Echtzeitbetrieb eines Prozessors unter einem nichtechtzeitfähigen Betriebssystem erhalten die bestehenden externen Hardware-Interrupt-Quellen unter Umgehung der bestehenden Interrupt-Hard- und Software direkten Zugriff auf den nicht-maskierbaren Interrupt des Prozessors.

Im Zuge der hohen Sicherheitsanforderungen einer Speicherprogrammierbaren Steuerung sind jedoch noch weitere Maßnahmen erforderlich, um sowohl den Sicherheitsstandard als auch die Benutzerfreundlichkeit einer speicherprogrammierbaren Steuerung zu gewährleisten, die auf einem herkömmlichen Personal-Computer lauffähig sein soll.

Die US-Schrift US 4,291,388 zeigt eine Steuereinheit zur Ansteuerung einer numerischen Steuerung. Die Steuereinheit umfasst einen flüchtigen Speicher (RAM) und einen nichtflüchtigen Speicher. Beide Speicher dienen dazu eine Datensicherung der im RAM abgelegten Daten zu realisieren. Es ist in dieser Schrift jedoch nicht gezeigt, wie eine PC basierende SPS sicherer gemacht und deren Wiederanlauf im Fehlerfalle beschleunigt werden kann.

### Vorteile der Erfindung

Die erfindungsgemäße Sicherheitsvorrichtung für eine speicherprogrammierbare Steuerung mit einer SPS weist die Kennzechnenden Merkmale des Anspruchs 1 auf in dem vorzugsweise nichtflüchtigen Speicher werden für den Hochlauf der speicherprogrammierbaren Steuerung notwendige Daten wie beispielsweise remanente Merker und wichtige Datenbausteine abgelegt. Diese zusätzliche Abspeicherung ermöglicht bei einer Fehlfunktion des die speicherprogrammierbare Steuerung übernehmende Personal-Computers einen raschen Anlauf der seicherprogrammierbaren Steuerung. Ein herkömmlicher Personnal-Computer kann mit der erfindungsgemäßen Hardwarekonfiguration leicht in Form einer entsprechenden Steckkarte nachgerüstet werden.

Eine andere Ausgestaltung sieht neben dem Controller, der Daten mit einer speicherprogrammierbaren Steuerung und über ein Bussystem mit der zu steuernden Peripherie austauscht, eine Überwachung vor. Sie überwacht ein von der speicherprogrammierbaren Steuerung erzeugtes und ihr von dem Controller zugeführtes Betriebsbereitschaftssignal. In Abhängigkeit von der Überwachung ist ein Kontaktgeber angesteuert, der ein Ausgangssignal bereitstellt, das die Funktionsfähigkeit der speicherprogrammierbaren Steuerung anzeigt. Bleibt beispielsweise für eine vordefinierte Zeitspanne das Betriebsbereitschaftssignal in der als gültig erkannten Weise aus, ändert der kontaktgeber sein Ausgangssignal, so daß dem Benutzer angezeigt wird, daß sich die speicherprogrammierbare Steuerung in einem nicht ordnungsgemäßen Zustand befindet. Mithilfe des Ausgangssignals des Kontaktgebers ist es dem Benutzer möglich, geeignete Gegenmaßnahmen oder Warnfunktionen zu aktivieren. Das Ausgangssignal ist durch einen potentialfreien Kontakt realisiert.

Eine vorteilhafte Weiterbildung sieht vor, daß die Überwachung in Abhängigkeit von dem Betriebsbereitschaftssignal einen das Bussystem steuernden Buscontroller ansteuert. Läßt das Betriebsbereitschaftssignal der speicheiprogammierbaren Steuerung den Schluß zu, daß bei der speicherprogrammierbaren Steuerung eine Fehlfunktion aufgetreten ist, steuert die Überwachung den Buscontroller in der Weise an, daß dieser mit einem Sicherheitszustand korrespondierende Ansteuersignale an die Peripherie sendet.

Eine weitere Ausgestaltung sieht neben dem Controller, der Daten mit einer speicherprogrammierbaren Steuerung und über ein Bussystem mit der zu steuernden Peripherie austauscht, eine zusätzliche Schnittstelle vor. Dieser Schnittstelle ist zumindest ein Bediensignal zugeführt, das über den Controller an die speicherprogrammierbare Steuerung Weitergeleitet wird. Der Benutzer kann direkt auf die speicherprogrammierbare Steuerung, beispielsweise durch Stop-, Aktivier- oder Startbefehle, auch dann zuzugreifen, wenn ein nicht echtzeitfähiges Betriebssystem, das normalerweise den Datenaustausch zwischen Anwender und speicherprogrammierbarerSteuerung sicherstellt, außer Betrieb ist.

In einer anderen Ausführung.ist neben dem Controller, der Daten mit einer speicherprogrammierbaren Steuerung und über ein Bussystem mit der zu steuernden Peripherie austauscht, eine Echtzeitsteuerung vorgesehen. Die Echtzeitsteuerung gibt ein Steuersignal auf ein Bussystem eines Personal-Computers, wobei das Bussystem des Personal-Computers den Datenaustausch zwischen Controller undspeicherprogrammierbarer Steuerung ermöglicht. Bei dieser Echtzeitsteuerung kann es sich um eine Ausführungform, wie im Stand der Technik beschrieben, handeln. Das Steuersignal stellt die Echtzeitfähigkeit eines Prozessors sicher, auf dem ein nichtechtzeitfähiges und ein echtzeitfähiges Betriebssystem lauffähig gemacht wurden. Erst diese Echtzeitsteuerung stellt den Parallelbetrieb der beiden Betriebssysteme sicher

Die in den verschiedenen Ausgestaltungen geschilderten Komponenten können in je nach Anwenderwünschen unterschiedlichen Kombinationen zu einer Funktionseinheit integriert werden.

Eine zweckmäßige Ausgestaltung sieht vor, den Controller, den Speicher und die Überwachung auf einer Platine anzuordnen. Damit ist eine Ausführungsform mit hoher Sicherheit gewählt.

In einer weiteren Ausgestaltung sind Controller,Überwachung, Kontaktgeber und Schnittstelle zu einer Funktionseinheit auf einer Platine integriert. Neben den sicherheitsrelevanten Funktionsblöcken gewährleisten die Schnittstelle und der Kontaktgeber dem Anwender, auf die Überwachungsfunktion zuzugreifen und direkt Befehle an die speicherprogrammierbare Steuerung abzugeben.

Weitere zweckmäßige Weiterbildungen ergeben sich aus weiteren abhängigen Ansprüchen und aus der Beschreibung.

### Zeichnung

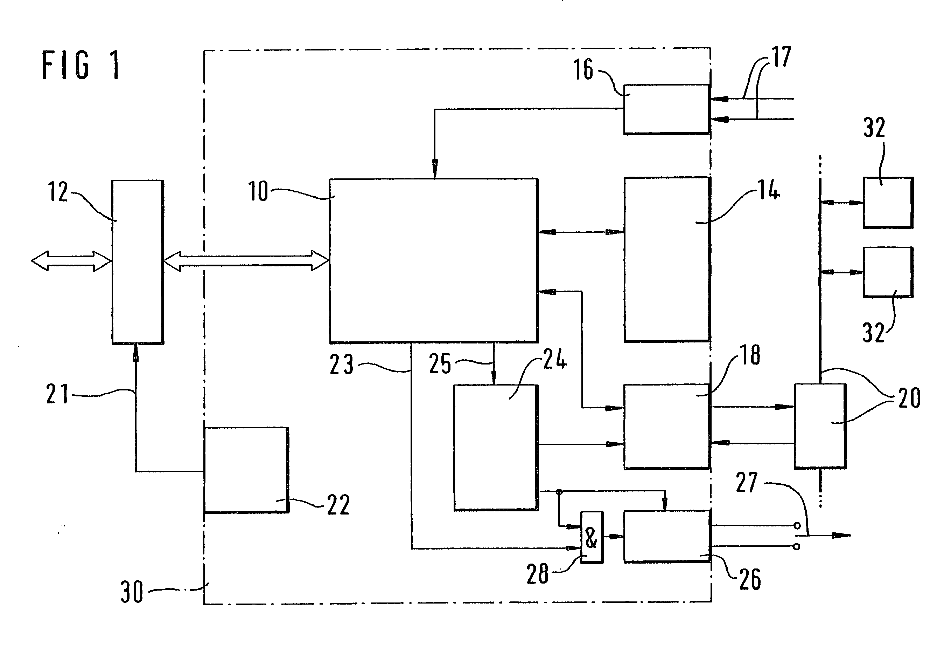

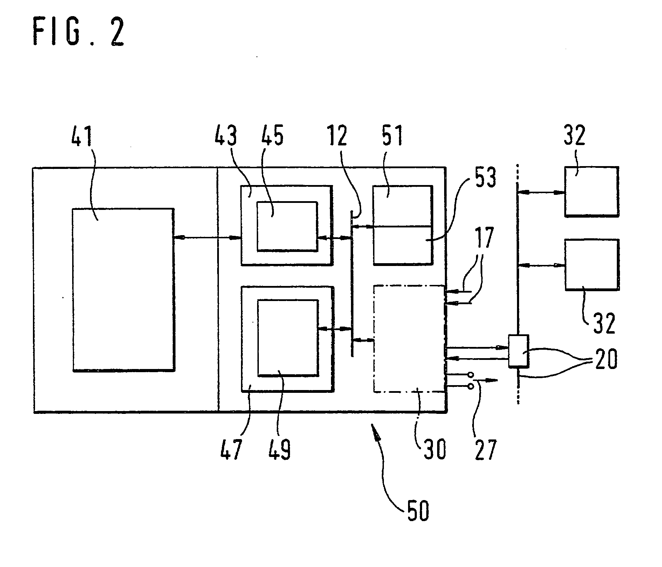

Das Ausführungsbeispiel der Erfindung ist in der Zeichnung dargestellt und wird im folgenden näher beschrieben. Es zeigen die Figuren 1 und 2 Blockschaltbilder der erfindungsgemäßen Vorrichtung.

### Beschreibung des Ausführungsbeispiels

Gemäß Figur 1 tauscht ein Controller 10 über ein ComputerBussystem 12 Daten mit einer nicht dargestellten speicherprogrammierbaren Steuerung aus. Der Controller 10 stellt den Datenaustausch mit einem Speicher 14 sicher. Der Controller 10 tauscht Daten mit einem Buscontroller 18 aus, der auf ein Bussystem 20 zugreift, an das zumindest die zu steuernde Peripherie 32 angeschlossen ist. Einer Schnittstelle 16 sind Bediensignale 17 zugeführt, die an den Controller 10 abgegeben werden. Der Controller 10 leitet ein Wecksignal 25 der speicherprogrammierbaren Steuerung an eine Überwachung 24 weiter. In Abhängigkeit von dem Wecksignal 25 steuert die Überwachung 24 den Buscontroller 18 an. Ein weiteres von der Überwachung 24 generiertes Signal wird sowohl dem Kontaktgeber 26 als auch einem Und-Gatter 28 zugeführt. Der Controller 10 stellt dem Und-Gatter 28 als weiteres Eingangssignal ein von der speicherprogrammierbaren Steuerung kommendes Betreibsbereitschaftssignal 23 zur Verfügung. Das Ausgangssignal des Und-Gatters 28 wird dem Kontaktgeber 26 zugeführt, der ein Ausgangssignal 27, das an zwei Anschlüssen abgreifbar ist, erzeugt. Controller 10, Speicher 14, Schnittstelle 16, Buscontroller 18, Echtzeitsteuerung 22, Überwachung 24, Kontaktgeber 26 und Und-Gatter 28 sind auf einer Steckkarte 30 angeordnet.

In Figur 2 finden sich die bereits beschriebenen Komponenten Steckkarte 30, Bediensignal 17, Ausgangssignal 27, Bussystem 20 und daran angeschlossene Peripherie 32 wieder. Die Steckkarte 30 ist nun in einem Steckplatz eines herkömmlichen Computers 50 eingeschoben und über das Computerbussystem 12 mit einem Anzeigefenster 45, das unter.einem Betriebssystem 43 läuft; mit einem SPS-Programm 49, lauffähig unter einem Echtzeitbetriebssystem 47, einem Prozessor 51 und einem Hauptspeicher 53 angebunden. Eine nicht notwendigerweise in den Computer 50 integrierte Programmierumgebung 41 läuft ebenfalls unter dem Betriebssystem 43.

Der prinzipielle Aufbau der Sicherheitsvorrichtung für eine speicherprogrammierbare Steuerung wird nachfolgend anhand Figur 2 erläutert. Die speicherprogrammierbare Steuerung wird von dem SPS-Programm 49 gebildet, das unter dem Echtzeitbetriebssystem 47 in Verbindung mit dem Prozessor51 abgearbeitet wird. Dieses SPS-Programm 49 kann der Anwender über die Programmierumgebung 41 erstellen. Diese Programmierumgebung 41 läuft unter dem Betriebssystem 43. Hierbei kann es sich um ein nichtechtzeitfähigeei Betriebssystem 43 eines herkömmlichen Personal-Computers wie beispielsweise Windows handeln. Das unter der Programmierumgebung 41 erstellt Anwenderprogramm wird kompiliert, so daß daraus das unter dem Echtzeitbetriebssystem 47 lauffähige SPS-Programm 49 entsteht. Dieses SPS-Programm 49 verarbeitet unter Verwendung von Datenbausteinen die Ausgangssignale der Peripherie 32. In Abhängigkeit von den Eingangsgrößen für das SPS-Programm 49 werden die entsprechenden Ansteuersignale für die Peripherie 32 erzeugt. Der Datenaustausch zwischen der speicherprogrammierbaren Steuerung - gebildet aus dem SPS-Programm 49 und dem Echtzeitbetriebssystem 47 - und der Peripherie 32 erfolgt über das Computerbussystem 12, die Steckkarte 30 und das Bussystem 20, an dem die Peripherie 32 angebunden ist. Um interessierende Zustände und Daten der Peripherie 32 sichtbar zu machen, ist ein Anzeigefenster 45 vorgesehen. Zustände der Ein-Ausgänge der Peripherie 32 oder des Bussystems 20 werden unter dem Betriebssystem 43angezeigt. Außerdem kann vorgesehen sein, daß der Anwender mit Hilfe der Programmierumgebung 41 die zur Anzeige zu bringenden Daten des Anzeigefensters 45 selbst konfiguriert.

Mit dem Hochlauf des Computers 50 werden das Betriebssystem 43 und das zugehörige Anzeigefenster 45 gestartet. Anschließend erfolgt der Hochlauf des Echtzeitbetriebssystems 47. Daraufhin wird das SPS-Programm 49 aus dem Hauptspeicher 53 geladen und das Bussystem 20 konfiguriert. Je nach dem zuletzt hinterlegten Zustand startet das SPS-Programm 49 an der entsprechenden Stelle. Im Echzeitbetrieb wird das SPS-Programm 49 abgearbeitet und solange zyklisch durchlaufen, bis eine Abschaltbedienung auftritt. In diesem Fall werden das SPS-Programm 49, die aktuellen, in den Datenbausteinen hinterlegten Daten und gegebenenfalls die Zustände in den Speicher 14 gesichert.

Auf der Steckkarte 30 sind weitere sicherheitsrelevante Funktionen, eine Anzeige und eine Benutzereingriffsmöglichkeit realisiert, die nachfolgend anhand Figur 1 erläutert werden. Der Controller 10 steuert den Datenaustausch zwischen dem Computerbussystem 12 und dem Bussystem 20. Zyklisch werden die Ausgangszustände der Peripherie 32 ausgelesen und an das SPS-Programm 49 weitergegeben. Im Gegenzug liefert das SPS-Programm 49 Ansteuersignale für die Eingänge der Peripherie 32. Diesen Datenaustausch steuert der Controller 10. Außerdem übernimmt der Controller 10 die Kopplung mit dem Speicher 14. Dieser ist vorzugsweise als nichtflüchtiger, batteriegepufferter remanenter Speicher 14 ausgelegt. In dem Speicher 14 sind sicherheitsrelevante Daten, auf die das SPS-Programm zugreifen kann, hinterlegt. Es handelt sich dabei vorzugsweise um solche Daten, die auch bei einem Spannungsausfall oder einer Fehlfunktion des Computers 50 für einen raschen Wiederanlauf zur Verfügung stehen müssen wie beispielsweise remanente Merker oder Datenbausteine, in denen charakteristische Peripheriedaten fest hinterlegt sind. Sollte der Computer 50 eine Fehlfunktion aufweisen, so wird die speicherprogrammierbare Steuerung bei dem anschließenden Hochlauf auf die in dem Speicher 14 hinterlegten Daten zurückgreifen

Über die Schnittstelle 16 werden Bediensignale 17 dem Controller 10 zugeführt. Die Bediensignale 17 lassen sich über Schalter beeinflussen. Ein Eingang der Schnittstelle 16 kann beispielsweise dazu benutzt werden, um die speicherprogrammierbare Steuerung in den Stoppbetrieb zu versetzen. Aktiviert der Benutzer über dieses Bediensignal 17 den Stoppbefehl, gibt der Controller 10 dieses Signal über das Computerbussystem 12 an das SPS-Programm 49 weiter, das hierauf in die entsprechende Stopproutine springt. Analog verhält es sich mit einem zweiten Bediensignal 17, das als Startbefehl zur Aktivierung des SPS-Programms 49 verwendet wird. Dem Benutzer wird dadurch die Möglichkeit gegeben, unter Umgehung der Programmierumgebung 41 auf den Zustand der speicherprogrammierbaren Steuerung Einfluß zum nehmen.

Der Controller 10 führt der Überwachung 24 das aus der speicherprogrammierbaren Steuerung kommende Wecksignal 25 zu Hierbei handelt es sich um ein zyklisch auftretendes Signal, ein Synchronisierungs- oder sogenanntes watch-dog-Signal. Die Überwachung 24 öffnet ein Zeitfenster von beispielsweise 2 Sekunden, innerhalb dem eine Flanke des Wecksignals 25 auftreten muß, um auf einen fehlerfreien Betrieb der speicherprogrammierbaren Steuerung zu schließen. Andernfalls generiert die Überwachung 24 ein Notsignal für den Buscontroller 18, das eine Notfunktion des Buscontrollers 18 aktiviert. Empfängt der Buscontroller 18 von der Überwachung 24 dieses Notsignal, steuert er die Peripherie 32 in Form eines vordefinierten Sicherheitsbetriebs an. Diese Sicherheitsansteuerung ist in dem Buscontroller 18 hinterlegt.

Der Kontaktgeber 26 stellt ein von dem Benutzer abgreifbares Ausgangssignal 27, welches vorzugsweise als potentialfreies Schaltsignal abgreifbar ist, zur Verfügung. Das Ausgangssignal 27 zeigt an, ob sich die speicherprogrammierbare Steuerung in ordnungsgemäßem Zustand befindet. Die Anzeige des nicht ordnungsgemäßen Zustands der speicherprogrammierbaren Steuerung kann zum einen direkt durch ein von der Überwachung 24 erzeugtes Signal angestoßen werden. Der Controller 10 gibt das softwaremäßig erzeugte Störbetriebssignal an die Überwachung 24 ab, die hierauf dieses Signal hardwaremäßig in ein Ansteuersignal für den Kontaktgeber 26 umsetzt. Als weitere Alternative, ein Ausgangssignal 27 zu erzeugen, das einen nichtordnungsgemäßen Zustand der speicherprogrammierbaren Steuerung anzeigt, besteht in der Zuführung des Ausgangssignals des Und-Gatters 28. Hierzu wird neben dem Ausgangssignal der Überwachung 24 ein Betriebsbereitschaftssignal 23 Und-verknüpft. Der nichtordnungsgremäße Zustand wird dann durch das Ausgangssignal 27 angezeigt, wenn die speicherprogrammierbare Steuerung kein Betriebsbereitschaftssignal 23 abgibt und auch die Überwachung 24 einen nichtordnungsgemäßen Betriebszustand erkannt hat. Über das Ausgangssignal 27 können entsprechende Anzeige- und Warnfunktionen aktiviert werden.

Auf der Steckkarte 30 ist zudem die Echtzeitsteuerung 22 angeordnet, wie sie beispielsweise in der DE 44 06 094 A1 beschrieben ist. Sie gibt ein Sicherheitssignal 21 auf das Computerbussystem 12. Dadurch wird der Parallelbetrieb von dem Betriebssystem 43 und dem Echtzeitbetriebssystem 47 gewährleistet, ohne daß Einbußen hinsichtlich der Echtzeitfähigkeit des Echtzeitbetriebssystems 47 auftreten.

Der Controller 10, der Speicher 14, die Schnittstelle 16, der Buscontroller 18, die Echtzeitsteuerung 22, die Überwachung 24, der Kontaktgeber 26 und das Und-Gatter 28 sind vorzugsweise auf einer Platine angeordnet und bilden so die Steckkarte 30.

Die Funktion des Controllers 10 und des Buscontrollers 18 können auch durch einen einzigen Prozessor/Baustein ausgeführt werden.

## Patentansprüche

1. Sicherheitsvorrichtung für eine speicherprogrammierbare Steuerung (47, 49) mit einer speicherprogrammierbaren Steuerung, **dadurch gekennzeichnet, dass**
die speicherprogrammierbare Steuerung (47, 49) von einem SPS-Programm (49) gebildet ist, welches der Prozessor (51) eines Personal-Computersystems (50) mittels eines Echtzeitbetriebssystems (47) abarbeitet,
wobei die Sicherheitsvorrichtung einen Controller (10) umfasst, welcher Daten mit der speicherprogrammierbaren Steuerung (47, 49) über ein Bussystem (20) und mit der zu steuernden Peripherie (32) austauscht,
und wobei die Sicherheitsvorrichtung einen Speicher (14) umfasst, in dem bei Auftreten einer Abschaltbedingung sicherheitsrelevante Daten der speicherprogrammierbaren Steuerung (47, 49) abgelegt werden, auf die der Controller (10) Zugriff hat,
wobei die speicherprogrammierbare Steuerung (47, 49) so ausgestattet ist, dass sie im Falle einer Fehlfunktion des Personal-Computersystems (50) bei dem anschließenden Hochlauf des Personal-Computersystems (50) auf die im Speicher (14) hinterlegten Daten zugreift und das SPS-Programm an dem zuletzt hinterlegten Zustand startet, was den Wiederanlauf beschleunigt.

2. Speicherprogrammierbare Steuerung nach Anspruch 1, **dadurch gekennzeichnet, dass** eine Überwachung (24) vorgesehen ist, die ein von der speicherprogrammierbaren Steuerung (47, 49) erzeugtes und ihr von dem Controller (10) zugeführtes Wecksignal (25) überwacht.

3. Speicherprogrammierbare Steuerung nach einem der vorhergehenden Ansprüche, **dadurch gekennzeichnet, dass** ein Kontaktgeber (26) vorgesehen ist, der ein Ausgangssignal (27) bereitstellt, das die Funktionsfähigkeit der speicherprogrammierbaren Steuerung (47, 49) anzeigt.

4. Speicherprogrammierbare Steuerung nach einem der vorhergehenden Ansprüche, **dadurch gekennzeichnet, dass** die Überwachung (24) in Abhängigkeit von dem Wecksignal (25), einen den Datenaustausch mit dem Bussystem (20) steuernden Buscontroller (10, 18) ansteuert.

5. Speicherprogrammierbare Steuerung nach einem der vorhergehenden Ansprüche, **dadurch gekennzeichnet, dass** eine Schnittstelle (16) vorgesehen ist, der zumindest ein Bediensignal (17) zugeführt ist, das über den Controller (10) an die speicherprogrammierbare Steuerung (47, 49) weitergeleitet ist.

6. Speicherprogrammierbare Steuerung nach einem der vorhergehenden Ansprüche, **dadurch gekennzeichnet, dass** eine Echtzeitsteuerung (22) vorgesehen ist, die ein Steuersignal (21) auf ein Personal-Computerbussystem (12) gibt, wobei das Computerbussystem (12) den Datenaustausch zwischen Controller (10) und speicherprogrammierbarer Steuerung (47, 49) ermöglicht.

7. Speicherprogrammierbare Steuerung nach einem der vorhergehenden Ansprüche, **dadurch gekennzeichnet, dass** der Controller (10), und/oder der Speicher (14) und/oder die Überwachung (24) und/oder der Kontaktgeber (26) und/oder die Schnittstelle (16) auf einer Platine, vorzugsweise einer Steckkarte, angeordnet sind.

8. Verfahren zur Speicherung von sicherheitsrelevanten Daten einer speicherprogrammierbaren Steuerung (47, 49) mittels einer Vorrichtung nach einem der Ansprüche 1 bis 7, wobei ein SPS-Programm (49) solange in Echtzeit abgearbeitet und zyklisch durchlaufen wird, bis eine Abschaltbedingung auftritt, wobei im Falle dieser Abschaltbedingung das SPS-Programm (49) und die in den Datenbausteinen hinterlegten Daten und gegebenenfalls die Zustande in den Speicher (14) gesichert werden.

## Claims

1. Safety device for a programmable logic controller (47, 49), having a programmable logic controller, **characterized in that**
the programmable logic controller (47, 49) is formed by a PLC program (49) which is executed by the processor (51) of a personal computer system (50) using a real-time operating system (47),
the safety device comprising a controller (10) which interchanges data with the programmable logic controller (47, 49) by means of a bus system (20) and with the peripherals (32) to be controlled,
and the safety device comprising a memory (14) which, when a switching-off condition occurs, stores safety-relevant data of the programmable logic controller (47, 49), to which the controller (10) has access,
the programmable logic controller (47, 49) being equipped in such a manner that, in the event of a malfunction of the personal computer system (50), it accesses the data stored in the memory (14) during the subsequent start-up operation of the personal computer system (50) and starts the PLC program at the state which was stored last, thus accelerating the restart operation.

2. Programmable logic controller according to Claim 1, **characterized in that** provision is made of a monitoring system (24) which monitors a wake-up signal (25) which is generated by the programmable logic controller (47, 49) and is supplied to it by the controller (10).

3. Programmable logic controller according to one of the preceding claims, **characterized in that** provision is made of a contactor (26) which provides an output signal (27) which indicates the functionality of the programmable logic controller (47, 49).

4. Programmable logic controller according to one of the preceding claims, **characterized in that** the monitoring system (24) drives a bus controller (10, 18), which controls data interchange with the bus system (20), on the basis of the wake-up signal (25).

5. Programmable logic controller according to one of the preceding claims, **characterized in that** provision is made of an interface (16) which is supplied with at least one operating signal (17) which is forwarded to the programmable logic controller (47, 49) by means of the controller (10).

6. Programmable logic controller according to one of the preceding claims, **characterized in that** provision is made of a real-time controller (22) which passes a control signal (21) to a personal computer bus system (12), the computer bus system (12) making it possible to interchange data between the controller (10) and the programmable logic controller (47, 49).

7. Programmable logic controller according to one of the preceding claims, **characterized in that** the controller (10) and/or the memory (14) and/or the monitoring system (24) and/or the contactor (26) and/or the interface (16) are arranged on a printed circuit board, preferably a plug-in card.

8. Method for storing safety-relevant data of a programmable logic controller (47, 49) using a device according to one of Claims 1 to 7, a PLC program (49) being executed in real time and being run through cyclically until a switching-off condition occurs, the PLC program (49) and the data stored in the data modules and, if appropriate, the states being protected in the memory (14) in the event of this switching-off condition.

## Revendications

**1.** Dispositif de sécurité pour une commande par programme enregistré (47, 49) ayant une commande par programme enregistré,
**caractérisé en ce que**
la commande par programme enregistré (47, 49) est constituée par un programme SPS (49) qui prend en charge le processeur (51) d'un système d'ordinateur personnel (50) au moyen d'un système fonctionnant en temps réel (47),
le dispositif de sécurité comprenant un contrôleur (10) qui échange des données avec la commande par programme enregistré (47, 49) à travers un bus (20) et avec un périphérique (32) à commander, et
dans lequel le dispositif de sécurité comprend une mémoire (14) mémorisant des données concernant la sécurité de la commande par programme enregistré (47, 49), lorsque apparaissent des conditions de coupure, le contrôleur (10) ayant accès à ces données,
la commande par programme enregistré (47, 49) étant réalisée de sorte qu'en cas d'un dysfonctionnement du système d'ordinateur (50) lors du lancement du système d'ordinateur personnel (50) suivant, elle accède aux données mémorisées dans la mémoire (14) et le programme de commande, démarre à partir du dernier état mémorisé ce qui accélère le redémarrage.

**2.** Commande par programme enregistré selon la revendication 1,
**caractérisée par**
une surveillance (24) qui surveille un signal de réveil (25) constitué par la commande par programme enregistré (47, 49) et amené à celle-ci par le contrôleur (10).

**3.** Commande par programme enregistré selon l'une quelconque des revendications précédentes,
**caractérisée par**
un contacteur (26) fournissant un signal de sortie (27) qui indique la capacité de fonctionnement de la commande par programme enregistré (47, 49).

**4.** Commande par programme enregistré selon l'une quelconque des revendications précédentes,
**caractérisée en ce que**
en fonction du signal de réveil (25) la surveillance (24) commande un contrôleur de bus (10, 18) commandant l'échange de données avec le système de bus (20).

**5.** Commande par programme enregistré selon l'une quelconque des revendications précédentes,
**caractérisée par**
une interface (16) à laquelle on fournit au moins un signal de commande retransmis par le contrôleur (10) à la commande par programme enregistré (47, 49).

**6.** Commande par programme enregistré selon l'une quelconque des revendications précédentes,
**caractérisée par**
une commande en temps réel (22) qui fournit un signal de commande (21) sur un système de bus d'ordinateur personnel (10), le système de bus(12) permettant l'échange de données entre le contrôleur (10) et la commande par programme enregistré (47, 49).

**7.** Commande par programme enregistré selon l'une quelconque des revendications précédentes,
**caractérisée en ce que**
le contrôleur (10) et/ou la mémoire (14) et/ou la surveillance (14) et/ou le contacteur (26) et/ou l'interface (16) sont disposés sur une platine, de préférence une carte de circuit imprimé embrochable.

**8.** Procédé pour la mémorisation de données de sécurité d'une commande par programme enregistré (47, 49) au moyen d'un dispositif selon l'une quelconque des revendications 1 à 7,
**caractérisé en ce qu'**
un programme (49) de commande par programme enregistré travaille en temps réel et de manière cyclique aussi longtemps jusqu'à ce qu'apparaisse une condition de coupure, et dans ce cas, le programme (49) de commande par programme enregistré et les données mémorisées dans les composants de données et le cas échéant les états sont sauvegardés dans la mémoire (14).
